# EUROPEAN PATENT APPLICATION

(11) **EP 3 828 802 A1**
(43) Date of publication of application: **02.06.2021**
(21) Application number: 20213318.7
(22) Date of filing: 30.06.2015
(51) Int. Cl.: G06Q 30/04, G06Q 40/00, G06Q 10/06, G06F 17/40, G06F 21/62, G06Q 10/10, G06Q 20/10, G06Q 40/02, G09C 1/00

(54) **SYSTEM AND METHOD FOR ALLOCATING VALUE TO TIMEKEEPER WORK**

(30) Priority: 30.06.2014 US 201461998577 P
(62) Divisional of application: 15815185.2
(71) Applicant: Shaaban, Ahmed, Farouk, Chicago, IL 60601 (US); Thandra, Venkat, Chicago IL 60601 (US)
(72) Inventor: Shaaban, Ahmed, Farouk, Chicago, IL 60601 (US); Thandra, Venkat, Chicago IL 60601 (US)
(74) Representative: Cabinet Beaumont

(57) **Abstract**

The invention relates to a computer system for creating a fee agreement comprising: a single application server comprising a processing device configured to perform the following: receive identification of a legal field from a user device; provide a plurality of template fee agreements to the user device; receive identification of a single template fee agreement from the user device; receive terms selection data according to the selected template fee agreement from the user device; automatically generate a fee agreement; scan and perform optical character recognition on another fee agreement; analyze the another fee agreement for a term or condition including at least one of a billable rate, a contingency fee, or a term of payment; provide the term or condition to the fee agreement based on the analysis of the another fee agreement; and display the fee agreement.

## Description

### PRIORITY CLAIM

The present application herewith claims priority of Provisional App. No. 61/998,577, which was filed June 30, 2014, and shall be considered as if fully set forth herein.

### Field of the Invention

The present invention relates to the field of improved timekeeping and billing systems used in professional companies and firms such as legal, accounting, architectural and engineering, et alia, as well as consulting companies and firms, and more specifically it relates to the area of a flexible and improved client entry and maintenance system and method.

### Background of the Invention

In the current marketplace, there are a variety of computerized time and billing systems for professional firms which are marketed under the following Trademarks: Timeslips by Sage, BillQuick, Clio and others. Some of these systems are computer based while others operate primarily in a cloud computing environment. These systems, however, are not suited to large law firms and professional firms having a global presence, with multiple offices in a plurality of countries which must be linked together for proper billing and financial management. In addition, these are basic programs which do not contain the most up to date features such as transmissions by text, email, fax, computer voice calling, and social media announcements and billing. Other numerous and varied disclosures related to billing and timekeeping are also disclosed in the prior art as shown below.

EP 1,145,162 issued to Ashby discloses the use of a System for processing credit applications, financial and insurance services and administrative and management tools. The System will generate a price quote for insurance and finance and facilitate on line credit application processing. It will further provide detailed reports for finance, insurance inventory, tracking and other administrative matters. It will provide quick quotes for a lease or loan. It will also perform: inventory tracking, insurance tracking, purchase tracking, applicant profiling, targeted marketing, customer satisfaction, etc. The system will collect data for credit, a description of the item being sold, insurance will be offered for the item, licensing and data required for the government will be collected.

Ashby also discloses that the User can be a financial institution, a dealer, manufacturer, insurer or supplier. It can utilize and store credit agreements with customer ratings and interest rates which can be bundled and sold on a public exchange. FAQ's can be provided in the system, and it can provide Quick Quotes on the spot to the consumer. However, this disclosure is directed to car sales and insurance, not timekeeping. The terms it stores are contract terms, contract ID, customer ID, buy rate, the sales rate, dealer markup, payments, cash down, trade in value, lease fee, monthly payments, commission and taxes due. However, Ashby does not relate to professional timekeeping or billing.

EP Patent No. 1,769,452 issued to Allin discloses the use of a computerized system for residential and commercial construction projects to maintain and disburse construction draws during construction. It can track lien waivers, and can prepare, approve, sign and distribute hundreds of checks to subcontractors each month. It also tracks construction change orders. It can manage all of the persons involved in each draw. It manages and generates a construction budget and time line. It also manages payments to material suppliers. It can manage and store the inspection data for each project. It can manage budgets for GC's as well as the subs. It handles ACH payments. Template forms are utilized to facilitate the draw process. Notices can be sent by email, text or voice.

EP Patent No. 2,026,222 issued to Alquier discloses the use of a system and method which allows the addition, modification and deletion of data base fields dynamically without the use of a data base administrator. The system allows the addition and modification of an informational structure dynamically distributed directly via the user interface. It supports different types of entity attributes including, text, numerical information, date ad time, predefined values and binary objects, allows the creation of relational dependancies between information entities (e.g., patent/child), provides flexible reporting capabilities including spreadsheets, slides, documents, timelines, etc.; it allows a configurable data entry interface; it allows importation of data from external sources; it allows full text searches; logs modifications for an audit trial (important for pharma and med devices); includes email notifications. It allows for a user interface that is flexible and configurable. The system uses template items, coding and tables to accomplish these purposes. However, it is not directed toward time tracking and billing generation.

U.S. Patent Disclosure No. 2003/0120538 filed by Boerke, et al. discloses the use of a method for tracking progress on a task by dividing the period of time into a plurality of timeslots and determining a target number of subtasks to be completed during each timeslot. For example, the time slots may be divided into 15 minute increments. The system only tracks the number of subtasks completed for each timeslot. The method also keeps track statistically of variances in subtasks completed between workers. The task may include any type of work. The process may be used for planning purposes, i.e., as a planning tool such that management can plan and process daily or monthly work shifts according to the work to be done for particular tasks and subtasks. This helps a supervisor spot and correct negative variances in worker performance. The progress can be logged into a computer or worksheet or in paper format. Problems are also noted by the method for correction to improve performance by variance cards.

U.S. Patent Disclosure No. 2013/00090968 filed by Borza, discloses the use of an employee management and scheduling method which is directed to ensure that adequate personnel are present as required and that statutory requirements are met and costs are tracked and minimized. The Borza disclosure is also directed at apps for management cell phone usage wherein managers can track employees, their shifts and their skills and managing same. This allows for real time changes by employees that are sick or have not shown up for work. The locations may also be tracked. Scheduling software is used to manage multiple employees at multiple locations. From one screen, a manager may create, edit and delete shifts and also have access to other aspects of managing the organization staffings with information about positions, teams, skills, etc. being provided. The System can print Shift Assignment Reports and Employee Reports. However, this disclosure is directed toward scheduling employees and not tracking their time or billing for their time.

U.S. Patent Disclosure No. 2012/0233044 filed by Burger, et al., discloses the use of a Method and System for labor project management and costing which may run on a cell phone app to monitor employee activity, identify faulty activity and manage allocation of labor resources. The app, as installed on an employee cellphone, allows the employee to travel to various job locations and record the activities at each job location. The employee may log into or out of the timeclock app installed on the employee's cellphone. The system can be used to monitor managers and administrators as well as employees. The system can be used to transmit payroll information. A flag may be generated if the worker travels outside the permissible areas allocated to his role. The system stores employee photos, job locations, routes, job codes, SIC codes, etc. may be entered into the back end by an administrator. The system also generates reports, and has a "Dashboard" or summary report simply show who is on the jobe, what time they arrived and GPS confirmation of location. The LPM platform may also be operated in the Cloud.

U.S. Patent Disclosure No. 2014/0258057 filed by Chen discloses the use of a system and method for tracking the User's time of a mobile device for the purpose of billing clients. The system is provided with a digital timer which is launched at the time of arrival and then stopped when the employee leaves. The system is directed at tracking time on a mobile device or app. It tracks time sending texts and emails. Time is recorded as soon as the professional receives a voice mail, phone call, text or email. The user can also input notes with the system's time recording and entry. The app automatically looks up in the user's contacts list whether the call or email or text coming in is from a client, and if so, it begins to track it for billing purposes. If not in the contacts registry, the user is alerted at the time and can add the contact as a client to be billed.

U.S. Patent Disclosure No. 2013/0290154 filed by Cherry, et al. discloses the use of the system and method to manage employees at a plurality of jobsites by providing a database wherein a set of job site data is stored therein. Employee devices may collect a set of time punch data and photos to store in the system. Management apps are used on supervisory devices to monitor the job site data and employees and validate photos and activate employee apps. This system is shown operating on a Cloud environment. The app will operate with a web browser, WiFi or on GPS authentication. The system essentially operates as a time tracking system for job sites. The system stores time photos of the employees at check in and check out. The system also records a job number, a job phase and a cost code. The system also has a payroll calculator communicating with a payroll service.

U.S. Patent Disclosure No. 2001/0042032 filed by Chrawshaw discloses theuse of a system for capturing, processing and reporting time and expense data which can include flat fee billing, maximum fee billing and will also allow for discounts and write offs. It can be used for a wide range of businesses. A client will not have access to internal data of the company. The system will produce bills, expense reports, time sheets, proposals and project tracking. This appears to be a conventional program for law firm data which is run on a local server for one location. The system may produce various reports as needed. Bills may be delivered by email. The program will create envelopes for the bills. The system will also create budgets for the client.

US Pat. No. 6,038,547 issued to Casto discloses the use of a construction tracking and payment system for use by contractors and subcontractors so that work may be tracked and payment may be timely made after the work is completed and inspections performed. The system complies with AIA requirements. The system may be implemented on a handheld computer. The system will break down a construction job into various elements, and then a contractor or subcontractor will be given a copy of how the site is partitioned, then each contractor or sub is responsible for submitting applications using the partitioning to ensure uniformity the architect desires to impose. The system can import and use CAD information on the job site. The system uses coding approved by the AIA.

US Pat. No. 6,747,679 issued to Finch, II, et al. discloses the use of a time keeping and expense tracking server including a server that implements computer instructions that define logic for building GUI screens according to user instructions. The user can implement and design the screens needed for the tasks of time keeping and expense tracking. The system may be implemented on the Cloud or Internet with a laptop or wireless device desired. The GUI screen may be customized on a copany by company basis, a department by department basis, etc. The system also includes security wherein projects and project codes are only viewable by certain level employees.

US Pat. No. 7,343,316 issued to Goto, et al. discloses the use of a network based shift scheduling system for generating temporary shift workers. It is sent over portable terminals over a network. The system is set to secure and provide work for a plurality of workers. Workers can also submit cancellations or shift changes via the system. The system also accommodates email for communication purposes. The system may also recruit new employees. The system stores the name, age, sex address, mail address and qualifications of the employee, the workable time slots, the type of job, hourly wage, etc.

WPO 2014/016796 filed by Gupta, et al. discloses the use of a system and method for employee tracking in a mobile communication device wherein dynamic location reports may be generated in real time or near real time. The system is directed to door to door delivery or pickup sales forces. The System uses a mobile app on the employees cellphone to conduct the tracking of the employee. The system will raise flags if deviations from tracking occur. The system uses Blue Dophil software to analyze where employees should be performing tasks and produces flags when paramaters gathered fall outside permissible ranges. These flags are sent to management via text or email.

US Pat. No. 6,832,176 issued to Hartigan, et al. discloses the use of a method and system for tracking and reporting time spent on tasks in different application on the end users' computers while the tasks are bing performed. It may track the opening and closing of files automatically and send reports and messages directly to and from other applications. The software may also suggest categories for each task based upon at least one criteria. The system may use MS Outlook for assistance in tracking tasks and transmitting reports. It is directed toward attorneys and accountants. The system may track fixed fees and use data collected for evaluating production or sweat equity bonuses to employees. The system may track a plurality of projects or research endeavors. It can track the time spent by accountants on spreadsheets. It can track the time engineers spend on designing computer code or simulating circuit designs, etc. It mentions the use of Timeslips for professional time tracking and TABS 11 for tracking other professional time spent on tasks and projects. The system tracks time on computers used by the professionals involved. The system presents toolbars to assist in tracking time. The system will track time spent in applications such as MS Word, Excel, Outlook, Power Point, etc. It will track when the application is open, active and then closed. It can score and rate the usage of these various types of software automatically. Various reports may be generated by the system for management usage on a periodic basis, as desired.

WPO Patent Disclosure No. 2015/079776 to Hishiki discloses the use of a work state management system that manages clock in times for drivers of vehicles that work overnight shifts and calculates the appropriate breaks for the driver so that the driver is not over tired.

U.S. Patent Disclosure No. 2014/0344,122 filed by Hodgin, discloses the use for billing for time spent in an IM session by a service person wherein the system can automatically bill a project/client by searching for the name of the client or project within a text or instant message or a series or session of same. If the system cannot find the name of a client or project, then the user will associate the IM session with a new project or client so that the client may be billed for the IM session with the client. Or the System may default into a common template for the User's typical instant messaging sessions.

U.S. Patent Disclosure No. 2009/0006228 filed by Hodgin discloses the use of a time tracking system and method similar to the IM system noted above by Hodgin. The Hodgin system will also store a list of prior associations to Projects and Clients that are built on the same or similar words and phrases.

U.S. Patent Disclosure No. 2002/0154122 filed by Jackson, Jr. discloses the use of an improved system for employers, referral agencies, consultants and independent contractors to hire and manage employees and provide tax reports and wage reports. The Jackson, Jr. System may track and manage employees, salaries and experience to provide optimal benefits to the employer. The System produces computerized scheduling, billing, record keeping and payment templates. It provides a listing of invoices for the User to refer to. It consists of providing invoices for contractor services and performs its functions in a cloud based system.

US Pat. No. 8,838,486 issued to Kong, et al., discloses the use of a time manager interface on a communications display device which allows a worker to keep track of her or his time and activities. The time manager keeps track of time spent logging into and out of the system. This was important in years past when boot time were quite long. It discloses the use of scanning in employee badges to track work time. This disclosure is directed toward a system for checking work in and work out time. In one version of an embodiment, the System is located in the field. It discloses the use of GPS in the field to create an audit trail of time worked. Biometric information may be used for the system to identify the worker. It can be used nationwide for multiple local offices. It may be coupled to communicate with employee hand held devices. It can work over WiFi and cellular networks. It can store: DOB, SSN and other employee details. It can be used with a barcode or QR code. It can be used in connection with microphones, cameras and scanners. For remote sites, the system can check the IP address of the computer or hand held device to ensure security in the system. The system can also be used to check work schedules to lock an employee out of the system when not scheduled. When an employee arrives at a worksite, upon verification, one or more emails or text messages may be sent to management for that site. Employees may view the work schedules of other employees if granted permission to do so. In doing so, employees can request work dates and exchange them with others. The system can differentiate between exempt and non exempt employees. The system can display messages to employees during time in and time out registration.

U.S. Patent Disclosure No. 2012/0278211 filed by Loveland discloses a system for remotely tracking and monitoring Worker's activities via mobile phones or other mobile tracking devices. This system monitors continuously whether or not a worker is present at a worksite.

WPO 2010/11652 filed by Manser discloses a System and Method for tracking employee performance. The Manser system provides a user interface to allow the user to assess the balance of hard skills and soft skills of an employee, evaluate the employee's performance in a plurality of categories and compare the average cost for the job in the marketplace to the cost of the employee being evaluated. The system also analyzes the average cost of a similar job in the relevant marketplace during employee reviews. The program continually monitors the value of an employee to the employer to determine ROI at any given time. The system can be applied to direct hires, contractors, temps or any employee relationship. The system allows the identification of both over achievers and under achievers. The system provides a means by which employees may determine how to get the highest ratings via their work efforts.

EP 2338293 filed by Molotsi discloses a system for time tracking for employers on a mobile computing device. The system involves providing an event manager on a mobile computing device for managing a plurality of events which are then synchronized to a server. The system will automatically track time and estimate time spent on a task by the worker. This system logs events in the user's calendar, in emails and texts. Timestamps for events and mapping for the events are provided. A client list and data may be provided in one or more files or databases. The system may communicate with a worker's smartphone. The user may be able to open, edit, delete, review or manage all automatically created event records. The system may use information in the text, email, and calendar to automatically create a time tracking record for the user. In addition, the system may automatically convert emails, texts, meetings on a calendar to a time tracking event by means of a pop up box to the user.

WPO 2008/061146 filed by Neveu Holdings, LLC discloses a system and method for remote time collection for employee time on job sites. The system can collect an employee's name, picture, title, contact information, health and/or safety information, skill information, etc. The system can also collect for each employee a project name, project identification, location, project start date, project supervisor and detailed comments about project activity. The system can also collect information on vendors, such as name, address, phone, contacts and type of vendor. The system can also use GPS information and compare it with when the employee is supposed to work. The system collects biometric information to identify an employee. In one embodiment, a time collection database is configured to receive, process and store information related to projects such as name, identification, location start date, supervisor, etc; vendor's name, address, number contact, subcontractor type, etc. project supervisors, tasks, employee titles, departments and employee time records. Office data collection may include: job site, task and project information via a wireless connection. Encryption is used to transmit data to and from the remote site. The system may also include a field scheduling module to schedule a job for a particular jobsite and for a specific remote user(s). The user can edit hours and view comments from remote workers. Remote monitoring can record task completion, view management comments and ask for management assistance and crew responsibilities.

U.S. Patent Disclosure No. 2015/0081381 filed by Okoba discloses a system and method for recording time which may be used on a device, software or application. It may be used by logging into a plugin or extension. The time recorded may be exchanged for vouchers which may be redeemed or traded with other members. A user will register with an ID and password to log into the system. The system may record device activity, software activity, application activity, keyboard activity and mouse activity. The user's time spent in the browser or on a video game may be given a redeemable value. A database may store the recorded activity for further analysis. The system will work on computers, tablets, cell phones, television, games, digital books, exercise apparatus, web browsers, mobile apps and video games. Vouchers may represent monetary value, promotions, products or services. User name and password may be stored in system cookies. The system can capture video game or browser activities, keyboard or mobile keyboard activities. The activity spent in the system may translate to purchasing power so that the user may receive optimized value from their activities and the system may deliver purchasing incentives at the right time and place and for the right product or service. A business maybe selected as a favorite from user activity on the system.

U.S. Patent Disclosure No. 2015/0081487 filed by Porter, et al., discloses the use of a time tracking and productivity system including a tracking component to locate an employee to record time spent at various locations. This system is designed to monitor and improve coordination of patient care, and in particular, to limit the number of patient hours a resident physician can work per week. When the rules implemented by the ACGME are violated, strict fines and probations or suspension may be implemented. This system is primarily concerned with tracking an employee's location and work hours. This system can include cloud performance. It is the movement of an employee within predetermined boundaries that will trigger the recording of a new event. It can track time in a patient's room, a brake area, doing paperwork, etc. A GUI is used on handheld devices. The system can also use tags that interact with RF signals. The system records employee info and FRIDA numbers, the resident program director, the resident coordinator, start and end times for resident shifts, house calls, hospital room calls, night float, etc. If moonlighting is permitted, the system can track moonlighting hours as well. It will store vacation schedules and rotation schedules. The shift log can include a short trip buffer. Automatic warnings of over limit hours are sent to management for the residents via text, phone, email, etc.

US Pat. No. 6,185,514 issued to Skinner discloses a method and system for automatically collecting and analyzing information regarding time and work performed on a computer. It uses a data collector for monitoring certain potions of a worker's computer activity and an analyzer for showing which portions of the activity were continuous work activities, and the system will categorize the work into preset projects and tasks within a project. The information is periodically written to data storage. The system is directed toward telecommuters. The system automatically excludes time where there was no activity on a computer. The system is used to forecast future projects with reduced financial risk. The system includes the automatic documentation of time. The data stored on the system is encrypted so that it cannot be altered by the user. The data collector automatically collects the activity on a mouse and on the keyboard of the computer user. The system creates a log file of work activity. A hardware abstraction layer can interface with phones and other devices and can be used with pointing devices such as a tabled or mouse. The system keeps track of activities within open multiple windows on a computer.

US Pat. No. 8,209,243 issued to Smith, et al., discloses the use of a system for performing real time labor management and timesheet reporting which is adapted to wirelessly transmit timesheet information. The portable devices may be dedicated to tracking time only and cannot perform other computing functions. The system includes a portable electronic punch system that is capable of communicating with the labor management system via text. The system allows user to manage work schedules and report timesheet information without requiring an internet accessible computer. The units send timesheet information directly back to the server for analysis via wireless network. The text messages may contain: employee ID, clock in time, clock out time, break times, days worked, days off and other work related information. New user information may be set up by text message into the timekeeping system. The system may operate over any wireless system, i.e., GSM, GPRS, CDCP, Bluetooth, Wifi, etc.

US Pat. No. 9,020,848 issued to Ridge, et al., discloses the use of a method for tracking time and location of an employee according to a predefined schedule and it may utilize software to track the presence or non presence of: a NFC (near field communication), BLE (Bluetooth Low Energy) or other wireless device. The system will track the presence of an employee in a geofenced area. It will also track employee time and other data to log that into a payroll system. The low energy device then communicates data to a server if a signal could or could not be detected. It will also allow for manual clocking in and out in case of failure of the back end server. The system can also be used for security purposes. The system can function in real time or in batch request mode. The information may be a time stamp, a status or location of a mobile device. In one embodiment, the system can be used for employees for a retail store or restaurant. The system can utilize Bluetooth tapping to log in. It may be used at a trade fair both by tapping the device to a NFC communicator. It maybe used in connection with a mobile time clock app. It can be used to advise management when non authorized employees enter a restricted work zone. Management may input which work zones are restricted and which are not.

WPO Disclosure 2015/029073 file by Shirish discloses a system and method to measure aggregate and analyze time, effort and productivity by reviewing time spent on activities such as calls, travel, lab work, meetings, discussions and remote visits. PD's or Presence Devices may be used to track employee location. The system can track average daily work patterns. It can track work activities and private activities. It can track emails and browsing. It can account for flexible work hours, use of multiple and different types of computing environments (PC at work and home, smartphones, tablets, etc.) It can capture files, folders, web links, etc. It can make all personal endeavors password protected and private. It is intended to track effort and performance 24/7. It can provide modules that promote work focus and minimize distraction by awarding performance points, badges for consistent performance and progress in performance goals. It can measure improvement by creating an n-dimensional effort data cube and include analytics for custom reports. The system can go into self improvement mode to set goals for self improvement and activities related thereto. It can be used at work whenever and where ever. It has a time tracker for all online time. It has a Merger to merge offline and online time effort mapping. It has an interference engine to determine Work Patterns for employees, leave taken, work done on holidays, desk or supervisory or travel oriented job, etc. The System will also present organization goals and analytics, top performers, work patterns, recent deviations from work patterns. A Collector module measures data to improve the exact work effort at the individual level throughout the day. The System can be used on SAS (Software as a Service) and it maybe hosted in a cloud-computing environment.

U.S. Pat. No. 2012/0173297 A1 disclosed by Styn, et al., a method and system for task tracking and allocation is disclosed. The disclosure provides for a method in which an individual may create a set of instructions operable to perform a set of tasks in a computer readable medium. That set of tasks may comprise maintaining a database, generating a first interface displaying subjects associated with individual issues, and a second interface with notes specific to an issue selected by a user. The instructions stored in the database may be implemented accordingly and the computer may maintain a plurality of relationship records containing data indicating relationships across folders. The disclosure also mentions the prior use of MS Project and ERP systems that employ Gantt charts, milestones and tasks and subtasks with complex dependencies. This system keeps track of billable items. However, Van Styn is not a true timekeeping and professional billing system.

US Pat. No. 2014/0108644 A1 disclosed by Zaents, et al., a method and system for tracking time in a web-based environment is disclosed. The method of tracking time involves a web-based application to track time associated with several records. Identifying a record in an active state, generating a record associated with the active record and activating a timer, and having the ability to end the session in response to an indication that the record is an inactive state. The time-tracker may be hosted in a cloud-computing environment. The time-tracker may calculate the entire duration of the record by continuously adding the active times together. The method may detect a predetermined total duration of time has been exceeded and provide such indication to user. This disclosure mentions timekeeping, billing and using a web browser and multiple tabs to record time for multiple clients when a professional is switching back and forth between projects. It is useful for billing, accounting and auditing. More than one user can log into the system on a computer and track time her or his time on the same computer. It also teaches the use of sub-tabs to track time. A stop watch type button is used to switch on and off the time tracking, or time is tracked as the user switches browser windows.

In US 20140201138 A1 is disclosed a system and method regarding the functionalities, features, and user interface of a synchronization client to a cloud-based environment. The disclosure describes a method to keep different versions of documents synchronized between the local device and the cloud-computing environment. Embodiments of the prior art include systems and methods for a synchronization client that is connected with a collaboration environment including a cloud-based environment and runs on a client device such as an iPad.

In reviewing the prior art, there is disclosed in US 2013008062A1, a method and system for the management of professional services project information. Disclosed in the prior art is a method for improving the accessibility and transferability of various data or information resources used in the management of a business. In one embodiment of the prior art, is a computer network for managing a business, consisting of a computer network, CPU and processor and one or more distributed application means, data cooperating with said one or more distributed applications means, and data storage means, and project management database means cooperating with one or more distributed application means for facilitating the transfer of said data from said one or more distributed application means.

Further, U.S. Patent No. 20110054968 A1, Galaviz discloses a system for continuous performance improvement. The prior art discloses a management approach to employee productivity and quality assurance to clients. In one embodiment of the prior art is a computer-implemented method for continuous performance improvement, the method includes providing visibility of project documentation and allows for collaboration and version control for the project documentation, this is done over a web-based workspace.

Similarly, in U.S. Patent No. 20140095539 A1, Smit et al. discloses, a system and method for asynchronous client server session communication. The prior art provides a system that offers a highly effective solution to the aforementioned disadvantages of both client-server and Internet systems by providing a way to synchronize the data entered on a client system with the data on a server. Data input by the client are transferred to the server, and the server updates the client display. A plurality of servers can be used to serve a number of static or dynamic sources. Data can also be presented to a client without user input, meaning the data are automatically pushed to the client. This enables a client component to display the data immediately, or to transmit the data to another program to be handled as required.

Thus, nowhere in the prior is seen a billing system which can provide an improved and flexible and expedient means to provide new and existing clients with a wide variety of templates for fee arrangements which include but are not limited to: discounted hourly rates, blended and banded rates, offer specials and coupons that expire after a certain period of time; fee arrangement that are provided for prompt or early past payment, fee arrangements that use templates that have worked favorably in the past with the client, and other fee arrangements suited to induce the client to use the firm, continue to work with a firm, or bring a former client back to a firm on favorable terms and conditions.

### Summary of the Invention

The present invention consists of an improved client fee agreement entry and maintenance system for a timekeeping and billing system wherein a client's fee agreement may be entered into a billing and timekeeping system with greater flexibility and information than ever before. In the present invention, Improved Client Entry System and Method, the user may create a Client Fee Agreement much more expediently than in prior systems.

In addition, related corporate entities can all receive the same type of fee agreements, arrangements and volume discounts wherein the fee structure may be applied against the following billing and timekeeping fields: Matter, Task, Activity, Phase, Client, Client Group. In addition, the client may choose from a variety of discounted rates: hourly discount, discount after a preselected number of hours billed, flat fee, banded fee, capped fee, fixed fee and short term fee arrangements.

Definitions:
1. **Discounted Hourly.** Client receives x% discount on the firm's orattorney's published rate.
2. **Discounted after X Hours.** Client receives x% discount on the firm's or attorney's published rate after x number of hours billed to the client.
3. **Flat Fee.** Flat fees may be tied to a Matter, Phase, Task, Activity or Client Group. A Matter is a Project which has a defined beginning and a defined end. For example, litigation on a particular case, a divorce case, a child custody case, a patent, trademark or copyright matter are all examples of Matters. A Phase is a portion of a matter. For example, litigation may have the following phases: Pre-filing, Filing and Service, Dismiss Complaint Phase, Discovery Phase, Expert Phase, PreTrial Motions and Briefs, Trial and Post Trial and Appeal. A patent may have the following phases: Search, Application Preparation, Filing, Prosecution at the USPTO, Issuance and Post Issuance. An Activity generally describes the type of action taken on a Matter:
   Preparing Pleadings, Preparing a Contract, Legal Research on (topic), etc. Task is the description of how the Activity occurred, e.g., telephone conference, letter to client, fax to client, inter office meeting, intra office meeting, appearing in court, arguing motion, arguing appellate brief. Sometimes Tasks and Activities may overlap, yet the overall function is the Activity and the Task is more specific, such as a phone call, meeting, appearance in court, etc.
4. **Banded Fee.** This is where two or more related companies are banded together for the purposes of obtaining a Fee Discount based upon volume. A typical discount volume rate may be provided as follows: $1 million - 10%; $2 million -15%. Hence the client has an incentive to bring other business to the firm to reduce the client's own legal bills.
5. **Capped Fee.** This fee may be placed against a Matter, Task, Phase or Activity and is the most that may be charged for the activity. Coding may be set so that either a set fee is billed each time the Matter, Task, Phase or Activity is mentioned in a bill (for smaller projects), or it may be set for over a period of time to complete the project. Overages are treated as write offs.
6. **Blended fee** is where a Local Practice Group offers a discount to one or more clients based upon providing senior attorneys at a lower cost to supervise younger attorneys and a rate is chosen somewhere in between the two as a cost savings to the client to encourage the client to use youngerattorneys.
7. Contingency Fee. Contingency fees are offered in litigation generally where damages are expected to exceed $1 million minimum, and the litigation is not very complex. Contingency Fees are often offered in the following cases: personal injury, car crash, medical malpractice, etc. Often the contingency fee will escalate as the case drags on (over one year) or if it goes up on appeal (40%). In some more complex cases, a contingency fee is offered at the highest rate possible of 50%.
8. Reverse Contingency Fee. Reverse contingency fees are offered where available and consist of the cost savings to the client. For example in the are of Property Tax, a 50% savings fee may be offered to a client when Property Taxes have escalated from $20,000 to $30,000 per year. If the attorney is successful in saving the client $8,000 per year, the firm will receive $4,000 as a fee. In the case of a mortgage foreclosure, the total bill may be $200,000. If the firm is successful, they may offer $150,000 on the spot cash, and if accepted, then the Company will take $25,000 in fees.

In one preferred embodiment of the present invention, a client is provided with an online account where the client can choose from a wide variety of billing arrangements, depending on the type of matter which the client has a need for legal work. The basic types of traditional fee structures are as follows: discounted hourly, blended rates, banded rates, capped rates, flat fee rates, discounted rates for pre-payment or payment within a certain number of days or weeks after bill presentment, discounted rates for performing work during traditional slack months, discounted rates for payment during months when low payment volume is expected, etc.

At this point, the client set up may including setting up a preferred payment set up and billing system. For example, bills may be run weekly, bi weekly or monthly for certain corporations. The terms may be net 10 days from presentment, 20 or 30 without incurring a penalty or interest. The interest rate for default may be selected by the user, or a default rate may be chosen which escalates the longer the outstanding balance is due. The user at that point may be able to choose the preferred sort type for bills, by date and then by Timekeeper, or by Timekeeper and then date, or by various Matters chosen, or different activities such as litigation, transaction or type of legal field. When the client chooses these features, they will be automatically included in the Fee Arrangement for a given Matter, Phase, Task or Activity.

For example, the Client may request one rate for in-office tasks, but allow a higher rate for litigation and court appearances and trial. Or, the firm may not permit any discounts for Pre-Trial and Trial work on complex litigation matters in Superior Courts and Federal Court. Or the client may receive a lower rate if the Firm or Company is allowed to search for and utilized competent workers outside the U.S. or nation where the client or customer is located.

The System will be able to export and import fee arrangement and payment data from other locations and to combine clients by acquisition and merger. The system will be able to transfer a local office's billing and merge it into a regional system, or clients at the regional level may be spun off and exported to a local office.

Although the foregoing summary has set forth specific embodiments of the present invention, numerous other additions and substitutions may be found to be common in the prior art and obvious to try shall be included in the above summary as if set forth fully herein.According to one aspect, there is provided an improved system for the creation and implementation of Fee Agreements with professional and consulting firms wherein the client is provided with an online account and password for access to the System; the System is provided with a CPU and data storage; the Client's account is provided with a variety of Fee Arrangement templates for a Company which may be displayed electronically to the client; the Fee Arrangement templates are organized according to the work to be performed; the Fee Arrangement templates are provided with at least one menu having two or more items which the client may select from; the Fee Arrangement templates are provided in two or more languages to the client; the Fee Arrangement, when completed by the client, is uploaded into the System for review by Management and then may beaccepted by Management.

According to one embodiment, the system further has; means by which the client may select one of the following types of fee arrangements with the Company: discounted hourly rate; discount after the Company works for the client more than a preselected number of hours; a flat fee for a particular matter; a blended fee; a banded fee; a capped fee; a contingency fee and a reverse contingency fee.

According to one embodiment, the system further has: means to provide Fee Arrangement Templates to the client where in the fees are discounted in the following circumstances: non litigation, creation of form documents and contracts and tasks the Company will perform repeatedly for the client and pre-payment of fees.

According to one embodiment, the system further has means to provide a discount when work is not performed in the country where the Company is located.

According to one embodiment, the system further has means for the client to select one of the following billing cycles: weekly, bimonthly, monthly or every two months.

According to one embodiment, the system further has means to approve the Fee Arrangement by returning to the client the signed Fee Arrangement with the client which has been signed with an electronic encoded signature.

According to one embodiment, the system further has security wherein only authorized persons may view the Fee Arrangement with the client wherein security isimplemented by one or more of the following Security Categories: by name of Employee; by Job Title; by Department and by Job Level.

According to one embodiment, the system further has means by which the client may select an interest rate when the client's bill is overdue wherein the interest rate is related to one or more of the following published indices: US Treasury Bill rates; LIBOR; Average Mortgage Rates and Cost of Living.

According to one embodiment, the system further has means to conduct a credit check on the Client and if the credit check does not reach a certain quality, then the Company will require a cosigner for the Fee Arrangement.

According to one embodiment, the system further has: means to import preexisting Fee Arrangements from other Companies to provide competitive bids from Company Management.

According to a further aspect, there is provided an improved method for the creation and implementation of Fee Agreements with professional and consulting firms comprising the steps of: providing the client with an online account and password for access to the Method; providing a CPU and data storage; providing the Client's online account with a variety of Fee Arrangement templates for a Company which may be displayed electronically to the client; organizing the Fee Arrangement templates according to the work to be performed; providing at least one Fee Arrangement templates with at least one menu having two or more items which the client may select from; providing the Fee Arrangement Templates in two or more languages to the client; then, one the Client is satisfied with the Fee Arrangement, the client uploading the Fee Arrangement into the System and Management reviewing the Fee Arrangement for acceptance by Management.

According to one embodiment, the method further has the step of; the client selecting one of the following types of fee arrangements with the Company: discounted hourly rate; discount after the Company works for the client more than a preselected number of hours; a flat fee for a particular matter; a blended fee; a banded fee; a capped fee; a contingency fee and a reverse contingency fee.

According to one embodiment, the method further has: means to provide Fee Arrangement Templates to the client where in the fees are discounted in the following circumstances: non litigation, creation of form documents and contracts and tasks the Company will perform repeatedly for the client and pre-payment of fees.

According to one embodiment, the method further has means to provide a discount when work is not performed in the country where the Company is located.

According to one embodiment, the method further has means for the client to select one of the following billing cycles: weekly, bimonthly, monthly or every two months.

According to one embodiment, the method further has means to approve the Fee Arrangement by returning to the client the signed Fee Arrangement with the client which has been signed with an electronic encoded signature.

According to one embodiment, the method further has the step of: providing security wherein only authorized persons may view the Fee Arrangement with the client wherein security is implemented according to one or more of the following Security Categories: by name of Employee; by Job Title; by Department and by Job Level.

According to one embodiment, the method further has the step of: providing an interest rate when the client's bill is overdue wherein the interest rate is related to one or more of the following published indices: US Treasury Bill rates; LIBOR; Average Mortgage Rates and Cost of Living.
According to one embodiment, the method further has means to conduct a credit check on the Client and if the credit check does not reach a certain quality, then the Company will require a cosigner for the Fee Arrangement.

According to one embodiment, the method further has: means to import preexisting Fee Arrangements from other Companies to provide competitive bids from Company Management.

### Objects of the Invention

Thus, it is one primary object of the present invention to provide an improved Client Fee Agreement Creation System and Method for timekeeping and billing purposes in professional and consulting firms wherein the client will be provided with an online account with a Client ID and password and will be able to choose from a plurality of Fee Arrangement templates, including, but not limited to: flat fee, capped fee, banded fee, discounted hourly rate, discounted hourly rates according to Task, Matter, Activity, Phase and Client Group by first selecting an Area of Law and then viewing the available templates.

It is yet a further primary object of the present invention to provide an improved Client Fee Agreement Creation System and Method for timekeeping and billing purposes in professional and consulting firms wherein the System may provide Fee Arrangement templates in two or more languages.

Still a further primary object of the present invention is to provide an improved Client Fee Agreement Creation System and Method for timekeeping and billing purposes in professional and consulting firms wherein the client is provided with Fee Arrangement templates which will generate monthly, bi-monthly, weekly, quarterly, etc. bills to the client.

Still a further primary object of the present invention is to provide an improved Client Fee Agreement Creation System and Method for timekeeping and billing purposes in professional and consulting firms where the client is provided with an account and the client may upload a fee agreement from another prior firm and the System will prepare a similar agreements based upon the imported agreement.

An additional primary object of the present invention is to provide an improved Client Fee Agreement Creation System and Method for timekeeping and billing purposes in professional and consulting firms where the client may provide a list of related corporations which may be banded together in a client group and the new client will receive a volume discount according to business done in total by the entire Client Group.

Yet an additional primary object of the present invention is to provide an improved Client Fee Agreement Creation System and Method for timekeeping and billing purposes in professional and consulting firms which is provided with Security wherein only authorized persons may view a client's fee agreements only according to the following security groups: by Employee Name, Employee Job Title, Employee Job Level or Department.

A further primary object of the present invention is to provide an improved Client Fee Agreement Creation System and Method for timekeeping and billing purposes in professional and consulting firms where the client may choose a payment plan and interest rate for over due bills according to one or more of the following criteria: Treasury Bill Rate, LIBOR, Cost of Living or any other rate published.

Still a further primary object of the present invention is to provide an improved Client Fee Agreement Creation System and Method for timekeeping and billing purposes in professional and consulting firms where the client may propose a Fee Arrangement based upon the business he brings to the Company, as well as other clients he brings to the Company, and band these clients together for an overall discount rate.

Still a further primary object of the present invention is to provide an improved Client Fee Agreement Creation System and Method for timekeeping and billing purposes in professional and consulting firms which may run a credit report on the client or the client's business, and based upon that credit report, only offer the client a Fee Agreement with a cosigner with acceptable credit.

An additional primary object of the present invention is to provide an improved Client Fee Agreement Creation System and Method for timekeeping and billing purposes in professional and consulting firms wherein the client may select a Fee Arrangement Template, make any desired changes, upload the Agreement to the System for Approval and then obtain Approval within one business day.

Still a further primary object of the present invention is to provide an improved Client Fee Agreement Creation System and Method for timekeeping and billing purposes in professional and consulting firms wherein approval of a Fee Agreement may be accomplished with an electronic, encoded signature by an approved Company manager or director.

These and other objects and advantages of the present invention can be readily derived from the following detailed description of the drawings taken in conjunction with the accompanying drawings present herein and should be considered as within the overall scope of the invention.

### Brief Description of the Drawings

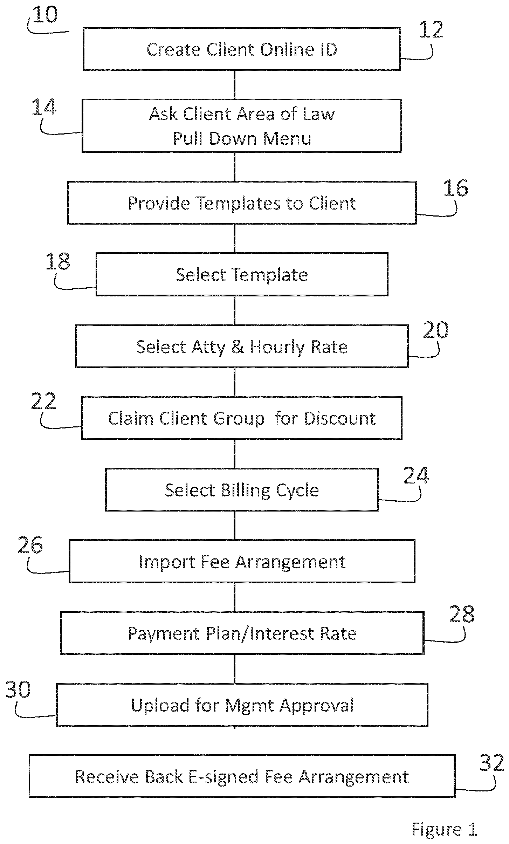

Figure 1 shows a flow chart of the Present Invention, Improved Creation and Implementation of Client Fee Agreement.

### Detailed Description of the Drawings

Shown now in Figure 1 is Improved Method for the Creation and Implementation of Client Fee Agreements 10 having the steps of: creating an online Client ID and password 12. Then the online System will ask the client about the Area of Law that the Client needs help in 14; any by using a menu, the Client can decide between, for example: Litigation or Non-Litigation are the basic categories. Under Litigation may appear: Car Accident, Personal Injury, Breach of Contract, Business Dispute, Divorce, Infringement, etc. Under Non-Litigation may appear: Tax, Estates, Wills and Trusts, Intellectual Property, etc. Additional sub menus will allow the client to better define the area of law. For example, Intellectual Property will allow the client to select from: Patent, Trademark, Trademark or Trade Secret. Help buttons will be provided if the client is unsure of the area of law or a definition for an area of law.

Once the Area of Law is selected, then the client will be provided with a set of Templates for Fee Agreements 16 and then the Client may review and select a Fee Arrangement template that best suits the Client's needs 18. For example, litigation with more than $1 million in damages might be offered to the client as a contingency fee Template and the Firm may provide the client with a minimum amount for fees, typically 33% for trial work and 40% for appeals work. If the Area of Law is hourly, a list of Attorneys and their billable rates may be selected at this point, or the client may select from a Blended rate where one senior attorney may supervise attorneys with less experience, and the rate for all attorneys will fall somewhere between the highest billing attorney and the lowest billing attorney. In any case, the client will select one or more attorneys and billable rates which are acceptable to the client 20.

Another type of fee arrangement which is well suited to Property Tax law, or a bill or fine is due and owed to a third party, is the reverse contingency fee where the firm merely shares in the benefits of reducing a bill or fine to the client.

The Company or Firm may offer to clients the chance to bring related corporations or other friendly companies to the Firm and these will form a Client Group for billing purposes where the totals of all the client bills are grouped together for the purposes of applying a mass discount 22. One suggested discount table is as follows: $ 1 million - 10%, $2 million 15%, etc. The client may then also select a billing cycle from a pull down menu 24: weekly, bi-weekly, monthly, bi monthly or quarterly.

Next, the Client will be offered the ability to competitively cross bid one or more legal projects by uploading another Firm's Fee Agreement into the System 26 and the System will scan and OCR the document and analyze it for billable rates, contingency fees, terms of payment and other terms and conditions in order to provide a competitive quote to the Client's business.

Another feature of the present inventive system is that the System will also allow the Client to select from one or more interest rate indices as a factor to be applied when the client pays late 28. A payment plan and an interest rate may be selected in advance and the interest rate may be tied into one of the following indices: Treasury Bill Rates, LIBOR, Preferred Mortgage Rates, Cost of Living.

Finally the proposed Fee Agreement may be uploaded into the System for Management Approval 30. Since all of the terms and conditions have already been selected by the client from a wide variety of Fee Templates best suited to the Client's needs, this cuts significant time in arriving at a fee agreement, and can be done in the Client's office or home in complete privacy. Preferably the Fee Agreement proposed by the Client may be reviewed in one day or even a few hours, and it can then be returned to the client by email with an encoded electronic signature so that the attorney or attorneys involved may begin work on the Client's legal issues within the shortest period of time.

Of course, the present system for generating and implementing a fee agreement may be applied to any or all of the following types of businesses in the US or around the world: Corporation, Company, Partnership, Business Venture, Business Association, LLC, LLP, PC, Swiss Verein, GmbH, NFP (Not for Profit) an unincorporated business association or venture.

Although in the foregoing detailed description the present invention has been described by reference to various specific embodiments, it is to be understood that modifications and alterations in the structure and arrangement of those embodiments other than those specifically set forth herein may be achieved by those skilled in the art and that such modifications and alterations are to be considered as within the overall scope of this invention.

## Claims

1. A computer system for creating a fee agreement, the system comprising:
a single application server comprising a processing device and a non-transitory storage medium for storing instructions that when executed by the processing device cause the processing device to perform the following:
receive identification of a legal field from a user device;
responsive to the legal field, provide a plurality of template fee agreements to the user device;
receive identification of a single template fee agreement of the plurality of template fee agreements from the user device to provide a selected template fee agreement;
receive terms selection data according to the selected template fee agreement from the user device to provide selected terms;
automatically generate a fee agreement based on the selected terms for the selected template fee agreement;
scan and perform optical character recognition on another fee agreement;
analyze the another fee agreement for a term or condition including at least one of a billable rate, a contingency fee, or a term of payment;
provide the term or condition to the fee agreement based on the analysis of the another fee agreement; and
display the fee agreement for review and electronic signature.

2. The system of claim 1, wherein the selected template fee agreement corresponds to at least one of the following:
a flat fee agreement; a capped fee agreement; a banded fee agreement; a discounted hourly rate agreement; or a discounted hourly rate agreement according to task, matter, activity, phase or client group.

3. The system of claim 1 or 2, wherein those instructions in the non-transitory storage that cause the processing device to receive the terms selection data are further operative to cause the processing device to receive, from the user device, identification of at least one attorney and at least one corresponding billable rate as part of the terms selection data.

4. In a single application server, a method for creating a fee agreement, the method comprising:
receiving, by the application server, identification of a legal field from a user device;
responsive to the legal field; providing, by the application server, a plurality of template fee agreements to the user device;
receiving, by the application server, identification of a single template fee agreement of the plurality of template fee agreements from the user device to provide a selected template fee agreement;
receiving, by the application server, terms selection data according to the selected template fee agreement from the user device to provide selected terms; and
automatically generating, by the application server, a fee agreement based on the selected terms for the selected template fee agreement;
scanning and performing, with the application server, optical character recognition on another fee agreement;
analyze, by the application server, the another fee agreement for a term or condition including at least one of a billable rate, a contingency fee, or a term of payment;
provide, by the application server, the term or condition to the fee agreement based on the analysis of the another fee agreement; and
displaying the fee agreement for review and electronic signature.

5. The method of claim 4, wherein the selected template fee agreement corresponds to at least one of the following:
a flat fee agreement; a capped fee agreement; a banded fee agreement; a discounted hourly rate agreement; or a discounted hourly rate agreement according to task, matter, activity, phase or client group.

6. The method of claim 4 or 5, wherein receiving the terms selections data further comprises:
receiving, by the application server from the user device, identification of at least one attorney and at least one corresponding billable rate as part of the terms selection data.
